# EUROPEAN PATENT APPLICATION

(11) **EP 4 357 990 A1**
(43) Date of publication of application: **24.04.2024**
(21) Application number: 22824601.3
(22) Date of filing: 24.03.2022
(51) Int. Cl.: G06Q 10/06, G06Q 10/00

(54) **RISK MANAGEMENT SYSTEM AND METHOD**

(30) Priority: 17.06.2021 JP 2021100837
(71) Applicant: Hitachi, Ltd., Tokyo 100-8280 (JP)
(72) Inventor: MATSUBA, Hiroya, Tokyo 100-8280 (JP); MATSUMOTO, Morio, Tokyo 100-8280 (JP); KUJIRAI, Toshihiro, Tokyo 100-8280 (JP)
(74) Representative: MERH-IP Matias Erny Reichl Hoffmann Patentanwälte PartG mbB
(86) International application number: PCT/JP2022/013891
(87) International publication number: WO 2022/264605

(57) **Abstract**

A risk management system evaluates a risk and plans an appropriate countermeasure. The risk management system includes countermeasure information indicating a relationship between each of a plurality of risk types and a countermeasure against each risk type, and a plurality of risk models that define a process of estimating a risk value at each point of time in future and determining a countermeasure, the plurality of risk models corresponding respectively to the plurality of risk types, selects a risk model corresponding to a risk type of each of the constituent elements, gives result information to the selected risk model to estimate a future risk value of each of the constituent elements, and, according to the risk model, extracts a countermeasure corresponding to the risk type, based on the countermeasure information. The risk management system includes also risk structure information defining a countermeasure for the management target and a threshold for applying the countermeasure, based on a structural relationship between the management target and the constituent elements, and determines an implementation time to apply the countermeasure, based on a risk value of each of the constituent elements, the risk value being estimated by a risk estimation unit, and on the threshold.

## Description

### Technical Field

The present invention relates to a technique for managing a risk for a facility or the like.

### Background Art

A facility with high importance, such as a power facility, requires that a risk be evaluated to carry out proper maintenance of the facility and maintain sound operation of the facility.

Patent Literature 1 discloses a means by which a current risk value is calculated, using a risk model, to create an optimal countermeasure against risks.

### Citation List

### Patent Literature

PTL 1: JP 2008-129648 A

### Summary of Invention

### Technical Problem

For a large-scale facility, a maintenance/operation plan need to be set with many factors being taken into consideration. For example, various factors affect risks the facility has, the factors including respective properties of many apparatuses included in the facility and a degree of aging of each apparatus caused by external factors in an environment in which the facility is installed. It is difficult to work out an appropriate countermeasures against risks according to a maintenance/operation plan involving such complicated factors to consider.

Patent Literature 1 discloses a technique of estimating a risk value using a risk model. However, the method described in Patent Literature 1 does not evaluates a spontaneous risk, such as equipment degradation, but evaluates a risk caused by execution of work, using a risk model. It is therefore cannot be said that the technique of Patent Literature 1 is a suitable technique for use in a situation where a plan for work to be performed in maintenance and operation needs to be set up.

An object of the present invention is to provide a technique of assisting in evaluating a risk and planning an appropriate countermeasure.

### Solution to Problem

A risk management system according to an aspect of the present invention is a risk management system that assists in risk management of a management target including a plurality of constituent elements. The risk management system comprises: a risk estimation unit including countermeasure information indicating a relationship between each of a plurality of risk types and a countermeasure against each risk type, and a plurality of risk models define a process of estimating a risk value at each point of time in future and determining a countermeasure, the plurality of risk models corresponding respectively to the plurality of risk types, the risk estimation unit selecting a risk model corresponding to a risk type of each of the constituent elements, from the plurality of risk models, giving result information to the selected risk model to estimate a future risk value of each of the constituent elements, and, according to the risk model, extracting a countermeasure corresponding to the risk type, based on the countermeasure information; and an integration unit including risk structure information defining a countermeasure for the management target and a threshold for applying the countermeasure, based on a structural relationship between the management target and the constituent elements, the integration unit determining an implementation time to apply the countermeasure, based on a risk value of each of the constituent elements, the risk value being estimated by the risk estimation unit 11, and on the threshold.

A risk management method according to an aspect of the present invention is a risk management method of assisting in risk management of a management target including a plurality of constituent elements, using a risk management system. The risk management method comprises: a risk estimation step including countermeasure information indicating a relationship between each of a plurality of risk types and a countermeasure against each risk type, and a plurality of risk models define a process of estimating a risk value at each point of time in future and determining a countermeasure, the plurality of risk models corresponding respectively to the plurality of risk types, the risk estimation step being executed to select a risk model corresponding to a risk type of each of the constituent elements, from the plurality of risk models, give result information to the selected risk model to estimate a future risk value of each of the constituent elements, and, according to the risk model, extract a countermeasure corresponding to the risk type, based on the countermeasure information; and an integration step including risk structure information defining a countermeasure for the management target and a threshold for applying the countermeasure, based on a structural relationship between the management target and the constituent elements, the integration step being executed to determine an implementation time to apply the countermeasure, based on a risk value of each of the constituent elements, the risk value being estimated by the risk estimation unit 11, and on the threshold.

### Advantageous Effects of Invention

An aspect of the present invention makes it possible to evaluate a risk and plan an appropriate countermeasure.

### Brief Description of Drawings

[FIG. 1] FIG. 1 is a block diagram of a configuration example of an optimization system according to an embodiment.
[FIG. 2] FIG. 2 is a flowchart showing an example of overall processing by the optimization system.
[FIG. 3] FIG. 3 depicts an example of risk model template information.
[FIG. 4] FIG. 4 depicts an example of apparatus information.
[FIG. 5] FIG. 5 depicts an example of individual estimation information.
[FIG. 6] FIG. 6 is a flowchart showing an example of processes of an estimation calculation initializing unit.
[FIG. 7] FIG. 7 depicts an example of risk structure information.
[FIG. 8] FIG. 8 depicts an example of schedule information.
[FIG. 9] FIG. 9 is a flowchart showing an example of processes of an optimization calculation executing unit.
[FIG. 10] FIG. 10 is a flowchart showing an example of processes of an integrated calculation executing unit.
[FIG. 11] FIG. 11 is a flowchart showing an example of processes of an estimation calculation executing unit.
[FIG. 12] FIG. 12 depicts an example of information outputted by an output unit.
[FIG. 13] FIG. 13 is a flowchart showing an example of processes of a maintenance/operation plan output unit.
[FIG. 14] FIG. 14 is a flowchart showing an example of processes of an insurance plan output unit.

### Description of Embodiments

An embodiment of the present invention will hereinafter be described with reference to the drawings.

### <Configuration of Optimization System>

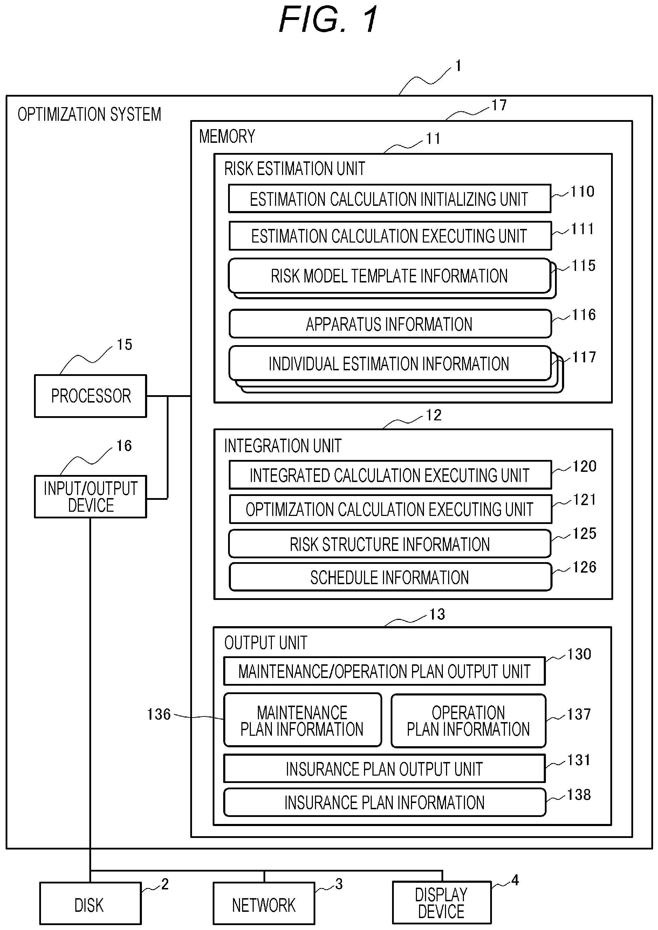

A configuration of an optimization system will be described with reference to FIG. 1. FIG. 1 is a block diagram of a configuration example of an optimization system 1 according to this embodiment.

The optimization system 1 is an example of a risk management system, and assists in risk management of a management target including a plurality of constituent elements. This embodiment will be described on the assumption that the management target is a substation and the constituent elements are transformers in the substation. It should be noted, however, that the management target and constituent elements are not limited to the substation and transformers. In addition, the management target may be interpreted as a facility and the constituent elements may be interpreted as apparatuses constituting the facility.

As shown in FIG. 1, the optimization system 1 is composed of a computer including a processor 15, an input/output device 16, and a memory 17.

The memory 17 stores software programs, data, and the like for implementing functions provided by the optimization system 1. The memory 17 is composed of, for example, a read-only memory (ROM), a random access memory (RAM), a flash memory, or a combination of these memories.

The input/output device 16 is a device (interface) that connects a disk 2, a network 3, a display device 4, and the like to the optimization system 1. The disk 2 is composed of, for example, a hard disk drive (HDD), a solid state drive (SSD), a flash memory, or a combination of these drives and memory. The disk 2 may be configured as a redundant arrays of inexpensive disks (RAID).

Examples of the network 3 include a power communication network 3, a local area network (LAN), the Internet, and a cellular network. Examples of the display device 4 include a liquid crystal display, an organic EL display, a PC, a smartphone, and a tablet terminal.

The processor 15 reads a software program, data, or the like from the memory 17, the disk 2, the network 3, or the like and processes the read program or data. The processor 15 writes data, information, or the like generated by various processes, to the memory 17 or the disk 2, transmits the data, information, or the like through the network 3, or displays the data, information, or the like on the display device 4. The processor 15 executes a software program read from the memory 17, thereby implementing a risk estimation unit 11, an integration unit 12, and an output unit 13.

The risk estimation unit 11 includes countermeasure information indicating a relationship between each of a plurality of risk types and a countermeasure against each risk type, and a plurality of risk models for estimating a risk value at each point of time in future, the plurality of risk models corresponding respectively to the plurality of risk types. The risk estimation unit 11 selects a risk model corresponding to a risk type of each of constituent elements, from the plurality of risk models, gives result information to the selected risk model to estimate a future risk value of each of the constituent elements, and calculates a new risk value and a cost required for a countermeasure that result at execution of the countermeasure, based on the countermeasure information.

The integration unit 12 includes risk structure information defining a countermeasure for the management target and a threshold serving as a criterion for determining whether or not to apply the countermeasure, based on a structural relationship between the management target and the constituent elements. The integration unit 12 determines an implementation time to apply the countermeasure, based on a risk value of each of the constituent elements, the risk value being estimated by the risk estimation unit 11, and on the threshold.

In this manner, the optimization system 1 provides a risk model in advance for each risk type, selects an appropriate risk model for each constituent element to evaluate a risk value, and determines a countermeasure for the management target, based on the risk value of each constituent element and on risk structure information. The optimization system 1 is thus able to assists in properly evaluating a risk and planning an appropriate countermeasure for the management target including the constituent elements.

The countermeasure information may include, for each risk type, preventive measure information indicating a relationship between a preventive measure for preventing occurrence of a risk in advance and a cost required for the preventive measure, and recovery measure information indicating a relationship between a risk type, a recovery measure for putting the management target back to its original state when a risk of the risk type occurs, and a cost required for the recovery measure. This allows assisting in properly evaluating a risk and planning appropriate preventive and recovery measures.

Risk types may include one or more of the following risks: an apparatus deterioration risk indicating a risk resulting from the deteriorated state of an apparatus included in the management target, a natural disaster risk indicating a risk resulting from the influence of a natural disaster for the management target, and a cyberattack risk indicating a risk resulting from a cyberattack on the management target. As a result, in evaluating the apparatus deterioration risk, natural disaster risk, and cyberattack risk, each risk can be accurately evaluated, using a risk model appropriate for the property of the risk.

The output unit 13 classifies a countermeasure determined by the integration unit 12, according to an attribute included in the countermeasure information, and outputs the classified countermeasure. For example, when the attribute has two values of "maintenance" and "operation", the output unit 13 outputs two tables carrying the attributes "maintenance" and "operation", with the content of a countermeasure and an implementation time to apply the countermeasure being noted in each table. This allows a user to know the implementation time to apply the countermeasure and a preventive measure or recovery measure the user should carry out.

The output unit 13 outputs also the sum of risk values of the management target, the sum being calculated using risk models, and information indicating whether or not to apply an insurance, which is determined based on the sum of the risk values, such that the sum and the information are associated with each other. This allows the user to know the size of a risk for the management target as a whole and to use knowledge of the size of the risk as a criterion for determining whether or not to apply an insurance to the management target.

Processes of the risk estimation unit 11, the integration unit 12, and the output unit 13 will hereinafter be described.

The risk estimation unit 11 may include an estimation calculation initializing unit 110 and an estimation calculation executing unit 111, as processing units. The risk estimation unit 11 may include risk model template information 115, apparatus information 116, and individual estimation information 117, as information.

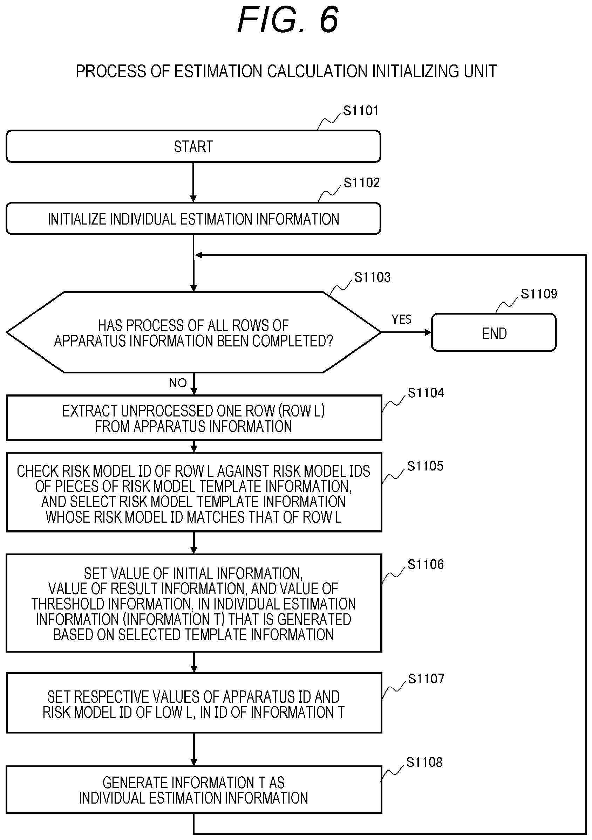

The estimation calculation initializing unit 110 initializes an estimation calculation. Details of a process of the estimation calculation initializing unit 110 will be described later (see FIG. 6).

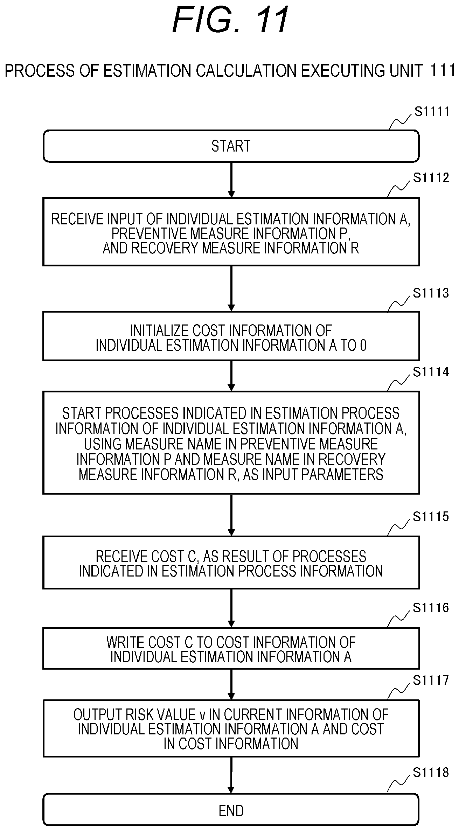

The estimation calculation executing unit 111 executes an estimation calculation. Details of a process of the estimation calculation executing unit 111 will be described later (see FIG. 11).

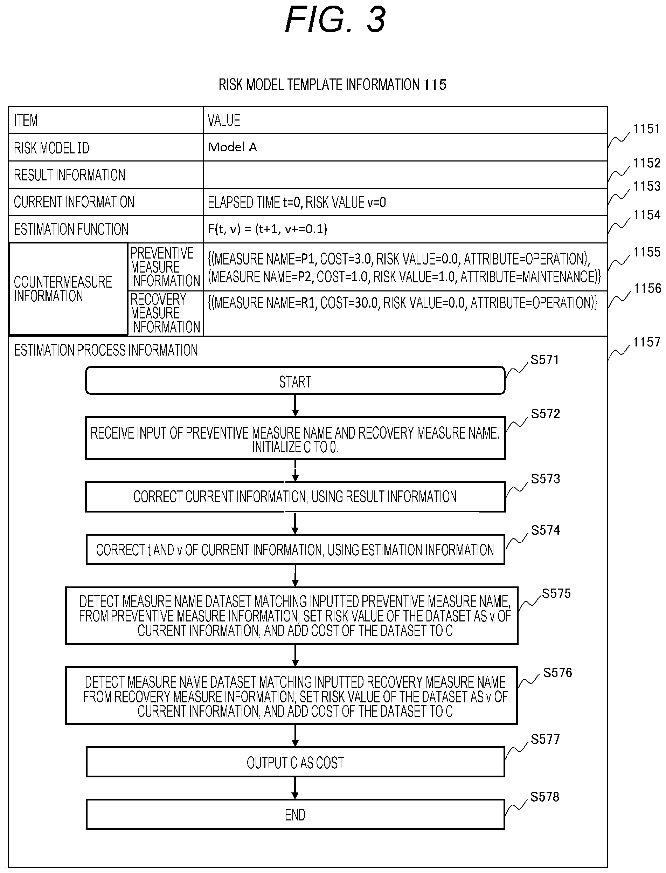

The risk model template information 115 includes information used as a template for configuring a risk model. Details of the risk model template information 115 will be described later (see FIG. 3).

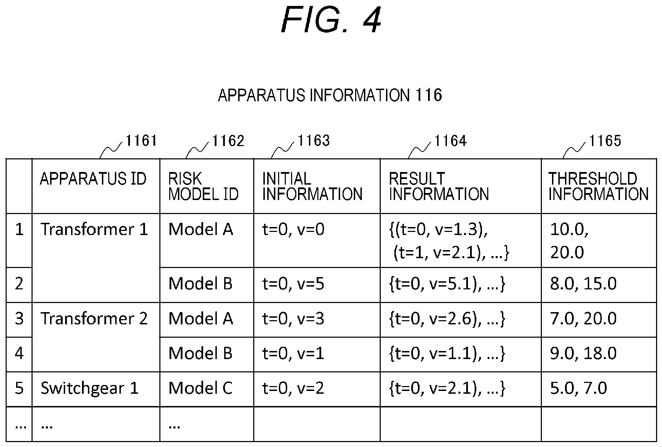

The apparatus information 116 includes information on an apparatus. Details of the apparatus information 116 will be described later (see FIG. 4).

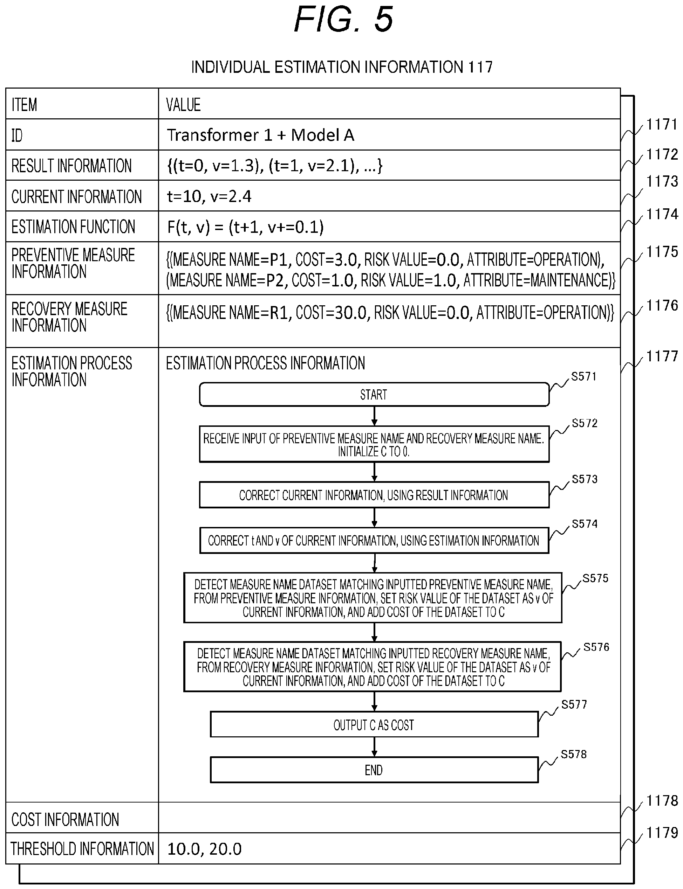

The individual estimation information 117 includes information estimating the risk of a failure or the like of an individual apparatus. Details of the individual estimation information 117 will be described later (see FIG. 5) .

The integration unit 12 may include an integrated calculation executing unit 120 and an optimization calculation executing unit 121, as processing. The integration unit 12 may include risk structure information 125 and schedule information 126, as information.

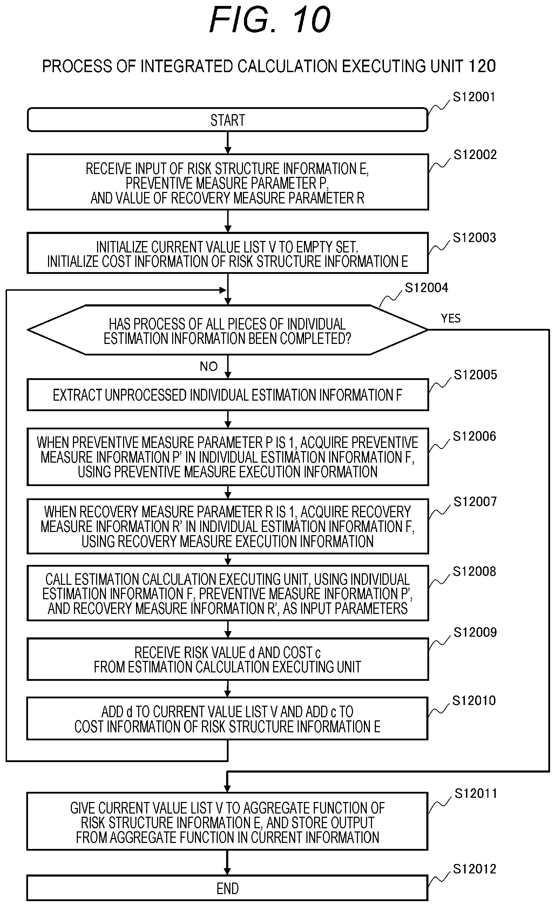

The integrated calculation executing unit 120 executes an integrated calculation. Details of a process of the integrated calculation executing unit 120 will be described later (see FIG. 10).

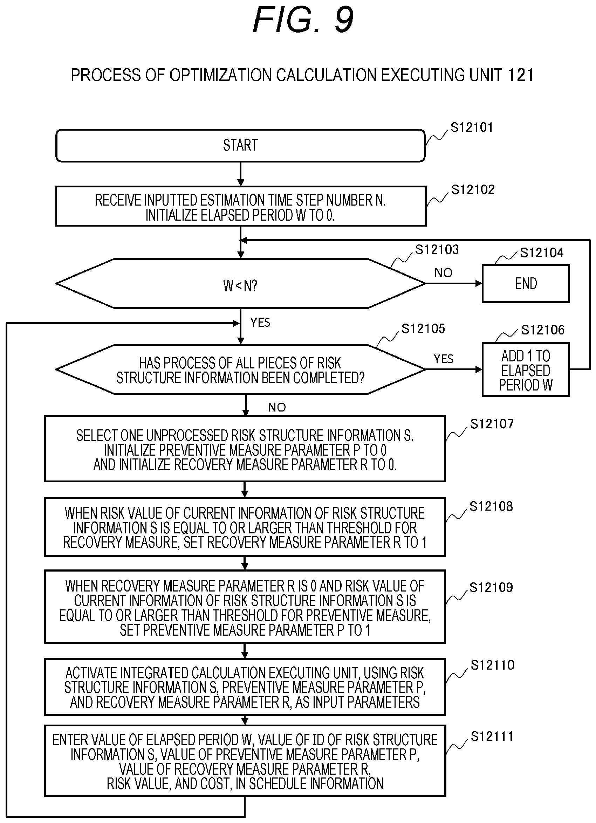

The optimization calculation executing unit 121 executes an optimization calculation. Details of a process of the optimization calculation executing unit 121 will be described later (see FIG. 9).

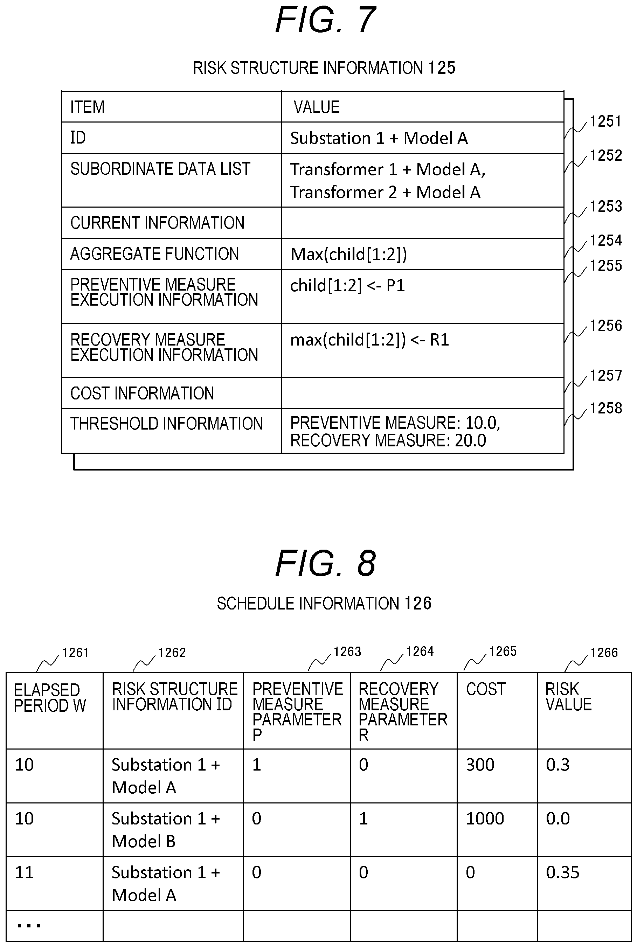

The risk structure information 125 is information indicating a risk structure of a device and an apparatus. Details of the risk structure information 125 will be described later (see FIG. 7).

The schedule information 126 is information indicating a schedule concerning a risk that changes with an elapsed period and a cost that occurs for preventing the risk or recovering from the risk. Details of the schedule information 126 will be described later (see FIG. 8).

The output unit 13 may include a maintenance/operation plan output unit 130 and an insurance plan output unit 131, as process units. The output unit 13 may include maintenance plan information 136, operation plan information 137, and insurance plan information 138, as information.

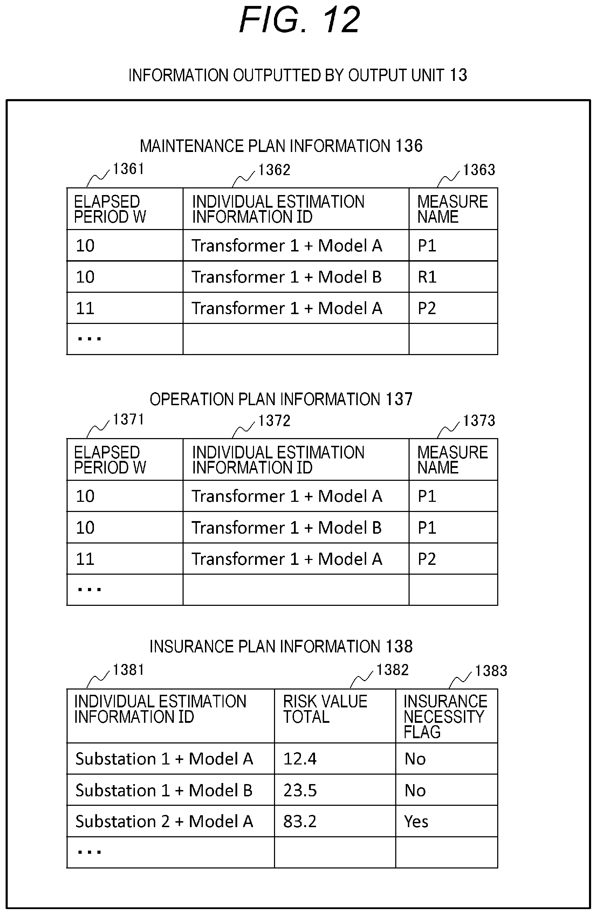

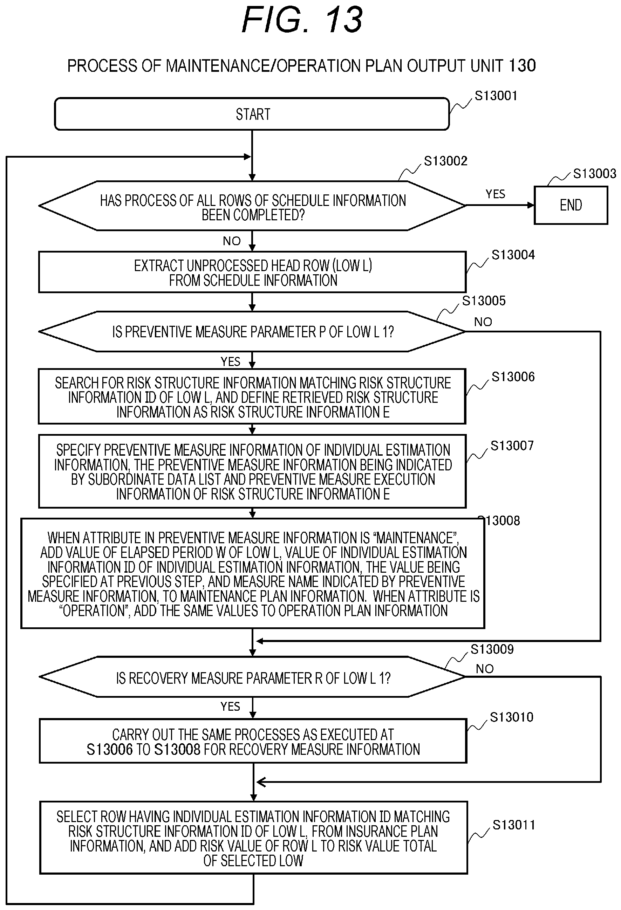

The maintenance/operation plan output unit 130 works out a plan on maintenance and operation, and generates and outputs the maintenance plan information 136 and the operation plan information 137. Details of a process of the maintenance/operation plan output unit 130 will be described later (see FIG. 13). Details of the maintenance plan information 136 and the operation plan information 137 will be described later (see FIG. 12).

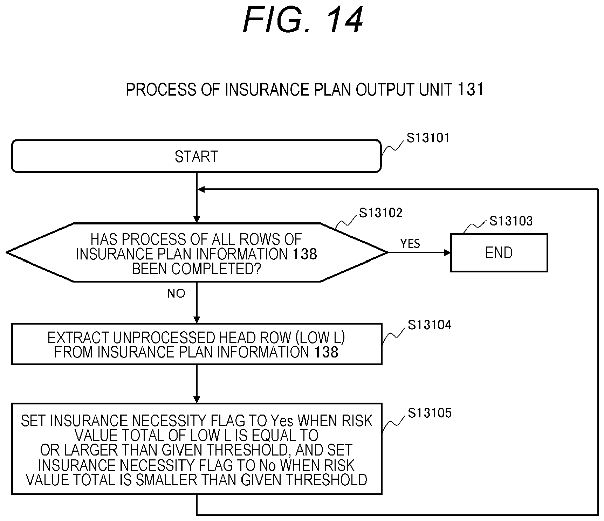

The insurance plan output unit 131 works out a plan on insurance application, and generates and outputs the insurance plan information 138. Details of the insurance plan output unit 131 will be described later (see FIG. 14).

### <Overall Processing by Optimization System>

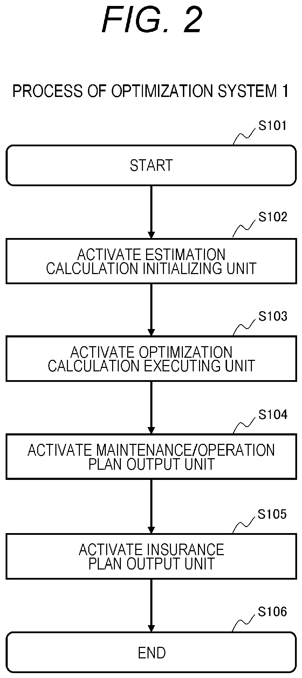

Overall processing by the optimization system 1 will be described with reference to FIG. 2. FIG. 2 is a flowchart showing an example of the overall processing by the optimization system 1.

The optimization system 1 (processor 15) starts the following processes (S101).

The optimization system 1 activates the estimation calculation initializing unit 110 (S102). Details of a process carried out by the estimation calculation initializing unit 110 will be described later (see FIG. 6).

The optimization system 1 activates the optimization calculation executing unit 121 (S103). Details of a process carried out by the optimization calculation executing unit 121 will be described later (see FIG. 9).

The optimization system 1 activates the maintenance/operation plan output unit 130 (S104). Details of a process carried out by the maintenance/operation plan output unit 130 will be described later (see FIG. 13).

The optimization system 1 activates the insurance plan output unit 131 (S105). Details of a process carried out by the insurance plan output unit 131 will be described later (see FIG. 14).

The optimization system 1 ends the whole processes (S106).

### <Risk Estimation Unit>

The risk estimation unit 11 will then be described in detail.

FIG. 3 depicts an example of the risk model template information 115.

The risk model template information 115 is information used as a template for creating a risk model. The risk model template information 115 is created, for example, by the user.

The risk model template information 115 includes items of risk model ID 1151, result information 1152, current information 1153, estimation function 1154, preventive measure information 1155, recovery measure information 1156, and estimation process information 1157. Information including the preventive measure information 1155 and the recovery measure information 1156 may be referred to as countermeasure information. Setting information on individual apparatuses in the risk model template information 115 creates the individual estimation information 117.

The risk model ID 1151 is information for identifying risk model template information. For example, "Model A" is entered as a value for the risk model ID 1151.

The result information 1152 is a storage area in which, when specific information on an apparatus is set in the risk model template to create individual estimation information, a history of risk values unique to the apparatus is stored. In the risk model template information 115, the result information may be empty of a value.

The current information 1153 is a storage area in which, when specific information on an apparatus is set in the risk model template to create individual estimation information, a current elapsed time t and a risk value v are stored. In the current information 1153 of the risk model template information 115, the current elapsed time t and the risk value v may be entered as an initial value, which is, for example,"0".

The estimation function 1154 is information indicating a function for estimating a risk value v at a future elapsed time t.

The preventive measure information 1155 is information indicating a relationship between a risk type, a preventive measure for preventing occurrence of a risk of the risk type in advance, and a cost required for the preventive measure. The preventive measure may include maintenance check or maintenance replacement of a constituent element (e.g., transformer). This allows assisting in properly evaluating a risk and planning appropriate maintenance check and maintenance replacement. The preventive measure may include a constituent element operation method that reduces a risk. This operation method is, for example, a load reduction operation method of reducing the maximum allowable load of the constituent element according to an elapsed period from the start of using the constituent element or an operation method of changing a power transmission path to put some apparatuses in a temporary suspended state so as to allow check or repair of the constituent element. This allows assisting in properly evaluating a risk and planning an appropriate load reduction operation.

The recovery measure information 1156 is information indicating a relationship between a risk type, a recovery measure for putting the management target back to its original state when a risk of the risk type occurs, and a cost required for the recovery measure. The recovery measure may include repair of a constituent element (e.g., transformer) and replacement of the constituent element. As a result, when an error in risk estimation leads to an actual failure, it is possible to assist in evaluating a cost for recovering from the failure and planning appropriate repair and replacement.

The estimation process information 1157 is information indicating a method of risk estimation using a risk model. For example, a risk is estimated by the following processes.

The estimation calculation executing unit 111 starts the following processes (S571).

The estimation calculation executing unit 111 receives input of a preventive measure name P and a recovery measure name R from a different process (e.g., a process at S1114 of FIG. 11). The estimation calculation executing unit 111 then initializes a variable C to 0 (S572).

The estimation calculation executing unit 111 corrects an elapsed time t and a risk value v of the current information 1173 (see FIG. 5), using the result information 1172 (see FIG. 5) (S573).

The estimation calculation executing unit 111 corrects the elapsed time t and the risk value v of the current information 1173, using the estimation function 1174 (see FIG. 5) (S574).

The estimation calculation executing unit 111 detects a measure name dataset matching the preventive device name P inputted at S572, from the preventive measure information 1175 (see FIG. 5). When detecting the measure name dataset successfully, the estimation calculation executing unit 111 sets a risk value v of the dataset as the risk value v of the current information 1173, and adds a cost value of the dataset to the variable C (S575).

The estimation calculation executing unit 111 detects a measure name dataset matching the recovery measure name R inputted at S572, from the recovery measure information 1176 (see FIG. 5). When detecting the measure name dataset successfully, the estimation calculation executing unit 111 sets a risk value v of the dataset as the risk value v of the current information 1173, and adds a cost value of the dataset to the variable C (S576).

The estimation calculation executing unit 111 outputs the variable C as a cost (S577), and ends the whole processes (S578).

FIG. 4 depicts an example of the apparatus information 116.

The apparatus information 116 includes items of apparatus ID 1161, risk model ID 1162, initial information 1163, result information 1164, and threshold information 1165.

The apparatus ID 1161 is information for identifying an apparatus, which is an example of a constituent element.

The risk model ID 1162 is information for identifying risk model template information. The risk model ID 1162 corresponds to the risk model ID 1151 in FIG. 3.

The initial information 1163 is information indicating an initial value of the current information 1153 of the risk model template information indicated by the risk model ID 1162.

The result information 1164 is information indicating a result value corresponding to the result information 1152 of the risk model template information indicated by the risk model ID 1162.

The threshold information 1165 is information indicating a threshold for determining whether or not to carry out a preventive measure and a threshold for determining whether or not to carry out a recovery measure.

As shown in the first and second lines of the apparatus information 116 of FIG. 4, one apparatus (Transformer 1) may have a plurality of risk models (Model A, Model B). The apparatus information 116 may be used when the individual estimation information 117, which will be described later, is generated.

FIG. 5 depicts an example of the individual estimation information 117.

The individual estimation information 117 includes items of ID 1171, result information 1172, current information 1173, estimation function 1174, preventive measure information 1175, recovery measure information 1176, estimation process information 1177, cost information 1178, and threshold information 1179.

The ID 1171 is information for identifying the individual estimation information 117. The ID 1171 may include respective values of the apparatus ID 1161 and risk model ID 1162 in the apparatus information 116.

In the result information 1172, the result information 1164 of the apparatus information 116, the result information 1164 being specified by respective values of the apparatus ID 1161 and risk model ID 1162 that are indicated in the ID 1171, is set.

In the current information 1173, a current information value specified based on a risk model indicated by the risk model ID 1162, the risk model being indicated by the ID 1171, is set.

In the estimation function 1174, a value of the estimation function 1154 of the risk model template information 115, the value of the estimation function 1154 being specified by a value of the risk model ID 1162 that is indicated in the ID 1171, is set.

In the preventive measure information 1175, a value of the preventive measure information 1155 of the risk model template information 115, the value of the preventive measure information 1155 being specified by a value of the risk model ID 1162 that is indicated in the ID 1171, is set.

In the recovery measure information 1176, a value of the recovery measure information 1156 of the risk model template information 115, the value of the recovery measure information 1156 being specified by a value of the risk model ID 1162 that is indicated in the ID 1171, is set.

In the estimation process information 1177, a value of the estimation process information 1157 of the risk model template information 115, the value of the estimation process information 1157 being specified by a value of the risk model ID 1162 that is indicated in the ID 1171 is set.

In the cost information 1178, a cost required in a case of carrying out a preventive measure or circulation measure on an apparatus identified by the apparatus ID 1161 that is indicated in the ID 1171, the preventive measure or circulation measure corresponding to a risk model indicated by the risk model ID 1162, is set.

In the threshold information 1179, a value of the threshold information 1165 of the apparatus information 116, the value of the threshold information 1165 being specified by respective values of the apparatus ID 1161 and risk model ID 1162 that are indicated in the ID 1171, is set.

FIG. 6 is a flowchart showing an example of processes of the estimation calculation initializing unit 110.

The estimation calculation initializing unit 110 starts the following processes (S1101).

The estimation calculation initializing unit 110 initializes the individual estimation information 117 to make it empty of value (S1102).

The estimation calculation initializing unit 110 determines whether it has completed processing of all rows of the apparatus information 116 (S1103).

When having completed processing of all rows of the apparatus information 116 (S1103: YES), the estimation calculation initializing unit 110 ends the whole processes (S1109).

When an unprocessed row remains in the apparatus information 116 (S1103: NO), the estimation calculation initializing unit 110 extracts one unprocessed row from the apparatus information 116 (S1104). Hereinafter, the extracted one row is expressed as a row L.

The estimation calculation initializing unit 110 checks the risk model ID 1162 of the row L against the risk model ID 1151 of pieces of risk model template information 115, and selects the risk model template information 115 whose risk model ID matches that of the row L (S1105). Hereinafter, individual estimation information 117 generated based on the selected risk model template information 115 is expressed as information T.

The estimation calculation initializing unit 110 sets a value of the initial information 1163 of the row L in the current information 1173 of the information T, sets a value of the result information 1164 of the row L in the result information 1172 of the information T, and sets a value of the threshold information 1165 of the row L in the threshold information 1179 of the information T (S1106).

The estimation calculation initializing unit 110 sets respective values of the apparatus ID 1161 and risk model ID 1162 of the row L in the ID 1172 of the information T (S1107).

The estimation calculation initializing unit 110 thus generates the information T, which are set at S1106 and S1107, as the individual estimation information 117 (S1108). The estimation calculation initializing unit 110 then returns to S1103. Hence the initial individual estimation information 117 as shown in FIG. 5, which will be described later, is generated.

### <Integration Unit>

The integration unit 12 will then be described in detail.

FIG. 7 depicts an example of the risk structure information 125.

The risk structure information 125 includes items of ID 1251, subordinate data list 1252, current information 1253, aggregate function 1254, preventive measure execution information 1255, recovery measure execution information 1256, cost information 1257, and threshold information 1258.

The ID 1251 indicates a value for identifying the risk structure information 125. The ID 1251 includes, for example, a management target ID and a risk model ID.

The subordinate data list 1252 indicates a list of IDs of pieces of individual estimation information 117 put under management of the risk structure information 125 as subordinate data.

The current information 1253 indicates a current elapsed time and a risk value of the management target indicated in the ID 1251.

The aggregate function 1254 indicates a function used to aggregate risk values of pieces of individual estimation information 117 included in the subordinate data list 1252.

The preventive measure execution information 1255 indicates information on a preventive measure recommended as a preventive measure to execute on the management target indicated in the ID 1251.

The recovery measure execution information 1256 indicates information on a recovery measure recommended as a recovery measure to execute on the management target indicated in the ID 1251.

The cost information 1257 indicates the size of a cost that arises when at least either the preventive device or the recovery measure is executed on the management target indicated in the ID 1251.

The threshold information 1258 indicates a threshold for determining whether or not to execute the preventive measure and a threshold for determining whether or not to execute the recovery measure.

For example, the risk structure information 125 is used when an overall risk for Substation 1 (substation 1) including Transformer 1 (transformer 1) and Transformer 2 (transformer 2) needs to be evaluated, as a risk estimated by using Model A.

In the risk structure information 125 shown in FIG. 7, the ID 1171 "Transformer 1+Model A" and the ID 1171 "Transformer 1+Model A" that are included in two pieces of the individual estimation information 117 are aggregated to obtain one risk value.

"Max (child [1: 2])" indicated in the aggregate function 1254 means that data with a higher risk is selected from the first and second data (e.g., all pieces of data) in the subordinate data list 1252. This means that the risk for the substation is considered to be the risk for the transformer that poses a higher risk.

"child [1 : 2] < -P1" in the preventive measure execution information 1255 indicates that executing a preventive measure named P1 on each transformer is recommended.

"max (child [1 : 2]) < -R1" in the recovery measure execution information 1256 indicates that executing a recovery measure named R1 on the transformer posing a higher risk is recommended.

Every instance of individual estimation information 117 may be under management of at least one piece of the risk structure information 125. However, the risk structure information 125 may have only the data from one piece of individual estimation information 117 in the subordinate data list 1252.

In this embodiment, to make description understandable, data from the individual estimation information 117 is entered in the subordinate data list 1252 of the risk structure information 125. However, in the subordinate data list 1252 of this risk structure information 125, data from different risk structure information 125 may be entered to form a multilayer data structure.

FIG. 8 depicts an example of the schedule information 126.

The schedule information 126 includes items of elapsed period W 1261, risk structure information ID 1262, preventive measure parameter P 1263, recovery measure parameter R 1264, cost 1265, and risk value 1266.

The elapsed period W 1261 indicates an elapsed period from the start of use of a management target (e.g., a substation). The unit of the elapsed period W shown in FIG. 8 is "week". However, the unit of the elapsed period W 1261 is not limited to "week", and may be "time", "day", or the like.

The risk structure information ID1262 indicates a value of the ID 1251 of the risk structure information 125.

The preventive measure parameter P 1263 is a parameter indicating whether or not to carry out a preventive measure. In FIG. 8, "1" of the preventive measure parameter P 1263 indicates that the preventive measure is carried out while "0" of the same indicates that no preventive measure is carried out. However, this definition of "1" and "0" is an example, and a parameter value indicating whether or not to carry out the preventive measure may be defined in any form.

The recovery measure parameter R 1264 is a parameter indicating whether or not to carry out a recovery measure. In FIG. 8, "1" of the recovery measure parameter R 1264 indicates that the recovery measure is carried out while "0" of the same indicates that no recovery measure is carried out. However, this definition of "1" and "0" is an example, and a parameter value indicating whether or not to carry out the recovery measure may be defined in any form.

The cost 1265 indicates the size of a cost that arises when the preventive measure or the recovery measure is carried out.

The risk value 1266 indicates the size of a risk that remains in the management target when the preventive measure or the recovery measure is carried out.

FIG. 9 is a flowchart showing an example of processes of the optimization calculation executing unit 121.

The optimization calculation executing unit 121 starts the following processes (S12101).

The optimization calculation executing unit 121 receives an estimation time step number N (N is an integer of 1 or more) inputted thereto, and initializes the elapsed period W to 0 (S12102). The estimation time step number N may be inputted by the user or inputted from a different process.

The optimization calculation executing unit 121 determines whether the elapsed period W is smaller than the estimation time step number N (i.e., W < N) (S12103).

When W < N is not satisfied (NO at S12103), the optimization calculation executing unit 121 ends the whole processes (S12104).

When W < N is satisfied (S12103: YES), the optimization calculation executing unit 121 determines whether it has completed processing of all pieces of risk structure information 125 (S12105).

When having completed processing of all pieces of risk structure information 125 (S12105: YES), the optimization calculation executing unit 121 adds 1 to the elapsed period W (S12106), and returns to S12103.

When unprocessed risk structure information 125 remains (S12105: NO), the optimization calculation executing unit 121 extracts one piece of unprocessed risk structure information 125. In description of FIG. 9, the extracted risk structure information 125 is expressed as risk structure information S. In addition, the optimization calculation executing unit 121 initializes the preventive measure parameter P to 0 and initializes the recovery measure parameter R to 0 as well (S12107).

When a risk value v in the current information 1253 of the risk structure information S is equal to or larger than a threshold for recovery in the threshold information 1258, the optimization calculation executing unit 121 sets the recovery measure parameter R to 1 (S12108).

When the recovery measure parameter R is 0 and the risk value v in the current information 1253 of the risk structure information S is equal to or larger than the threshold for prevention in the threshold information 1258, the optimization calculation executing unit 121 sets the preventive measure parameter P to 1 (S12109).

The optimization calculation executing unit 121 activates the integrated calculation executing unit 120, using the risk structure information S, the preventive measure parameter P, and the recovery measure parameter R as input parameters (S12110). By a process of the integrated calculation executing unit 120, which process will be described in detail later (see FIG. 10), respective values of the current information and the cost information in the risk structure information S are obtained.

The optimization calculation executing unit 121 enters a value of the elapsed period W, a value of the ID 1251 of the risk structure information S, a value of the preventive measure parameter P, a value of the recovery measure parameter R, a value of the cost information 1257 of the risk structure information S, and the risk value v of the current information 1253 of the risk structure information S, in the corresponding items of the schedule information 126, respectively (S12111). As a result, one row of the schedule information 126 shown in FIG. 8 is obtained. Subsequently, the integrated calculation executing unit 120 returns to step S12105.

Through the above processes, the schedule information 126 shown in FIG. 8 is generated.

FIG. 10 is a flowchart showing an example of processes of the integrated calculation executing unit 120. The integrated calculation executing unit 120 is activated at S12110 of FIG. 9.

The integrated calculation executing unit 120 starts the following processes (S12001).

As a result of S12110 of FIG. 9, the integrated calculation executing unit 120 receives input of the risk structure information 125 (which will hereinafter be referred to as risk structure information E), the preventive measure parameter P, and the recovery measure parameter R, as input parameters (S12002).

The integrated calculation executing unit 120 initializes a current value list V to an empty set, and initializes the cost information 1257 of the risk structure information E to 0 (S12003).

The integrated calculation executing unit 120 determines whether it has completed processing of all data from the individual estimation information 117 included in the subordinate data list 1252 of the risk structure information E (S12004).

When having completed processing of all data from the individual estimation information 117 included in the subordinate data list 1252 (S12004: YES), the integrated calculation executing unit 120 proceeds to step S12011.

When unprocessed data from individual estimation information 117 remains in the subordinate data list 1252 (S12004: NO), the integrated calculation executing unit 120 extracts one piece of unprocessed data from the individual estimation information 117, out of the subordinate data list 1252 (S12005). Hereinafter, this extracted data from individual estimation information 117 is referred to as individual estimation information F.

When the preventive measure parameter P is 1 (that is, when execution of the preventive measure is recommended), the integrated calculation executing unit 120 acquire preventive measure information P' (1175) in the individual estimation information F, using the preventive measure execution information 1255 of the risk structure information E (S12006).

When the recovery measure parameter R is 1 (that is, when execution of the recovery measure is recommended), the integrated calculation executing unit 120 acquires recovery measure information R' (1176) in the individual estimation information F, using the recovery measure execution information 1256 (S12007).

The integrated calculation executing unit 120 calls the estimation calculation executing unit 111, using the individual estimation information F, the preventive measure information P ', and the recovery measure information R', as input parameters (S12008). By a process of the estimation calculation executing unit 111, which process will be described in detail later (see FIG. 11), respective values of the current information and the cost information in the individual estimation information F are obtained.

The integrated calculation executing unit 120 receives a risk value d and a cost c from the estimation calculation executing unit 111 (S12009).

The integrated calculation executing unit 120 adds the risk value d to the current value list V, and adds the cost c to the cost information of the risk structure information E (S12010). The integrated calculation executing unit 120 then returns to step S12004.

At step S12011, the integrated calculation executing unit 120 enters the current value list V in the aggregate function 1254 of the risk structure information E, and stores output from the aggregate function 1254 in the current information 1253 of the risk structure information E (S12011). The integrated calculation executing unit 120 then ends the whole processes (S12012).

As a result, a risk value of an apparatus having the highest risk among apparatuses indicated by data from the individual estimation information 117 that is included in the subordinate data list 1252 is entered in the current information 1253 of the risk structure information E. For example, when the ID 1251 of the risk structure information 125 indicates a substation and each ID item in the subordinate data list 1252 indicates each transformer making up the substation, a risk value of a transformer with the highest risk is entered in the current information 1253 of the risk structure information 125.

FIG. 11 is a flowchart showing an example of processes of the estimation calculation executing unit 111. The estimation calculation executing unit 111 is called at S12008 of FIG. 10.

The estimation calculation executing unit 111 starts the following processes (S1111).

As a result of the process at S12008 of FIG. 10, the estimation calculation executing unit 111 receives input of the individual estimation information 117, the preventive measure information 1175, and the recovery measure information 1176, as input parameters (S1112). In description of FIG. 11, the inputted individual estimation information 117 is referred to as individual estimation information A, the inputted preventive measure information 1175 is referred to as preventive measure information P, and the inputted recovery measure information 1176 is referred to as recovery measure information R.

The estimation calculation executing unit 111 initializes the cost information 1178 of the individual estimation information A to 0 (S1113).

The estimation calculation executing unit 111 starts a process indicated in the estimation process information of the individual estimation information A (see FIGS. 3 and 5), using a measure name in the preventive measure information P and a measure name in the recovery measure information R, as input parameters (S1114).

The estimation calculation executing unit 111 receives a cost C, as a result of execution of the process indicated in the estimation process information 1177 of the individual estimation information A (S1115).

The estimation calculation executing unit 111 writes the cost C received at step S1115, to the cost information 1178 of the individual estimation information A (S1116).

The estimation calculation executing unit 111 outputs a risk value v in the current information 1173 of the individual estimation information A and a cost in the cost information 1178 (S1117). The risk value v and the cost that are outputted are received as a risk value d and a cost c, respectively, at S12008 of FIG. 10. Subsequently, the estimation calculation executing unit 111 ends the whole processes (S1118).

Hence the risk value and the cost that are based on the individual estimation information 117 are outputted.

### <Output Unit>

The output unit 13 will then be described in detail.

FIG. 12 depicts an example of information outputted by the output unit 13. Information output by the output unit 13 includes maintenance plan information 136, operation plan information 137, and insurance plan information 138.

The maintenance plan information 136 has items of elapsed period W 1361, individual estimation information ID 1362, and measure name 1363.

The elapsed period W 1361 and the individual estimation information ID 11362 are the same as the elapsed period W and the individual estimation information ID described above. The measure name 1363 indicates a preventive measure name or a recovery measure name.

For example, the second row of the maintenance plan information 136 indicates that as a maintenance plan, a recovery measure named "R1" is recommended in the 10th week (W), based on the individual estimation information ID "Transformer 1+Model B".

The operation plan information 137 has items of elapsed period W 1371, individual estimation information ID 1372, and measure name 1373. These items are the same as the items described above.

For example, the first row of the operation plan information 137 indicates that as an operation plan, a preventive measure named "P1" is recommended in the 10th week (W), based on the individual estimation information ID "Transformer 1+ Model A".

The insurance plan information 138 includes items of individual estimation information ID 1381, risk value total 1382, and insurance necessity flag 1383.

The individual estimation information ID 1381 is the same as the individual estimation information described above.

The risk value total 1382 indicates the total of risk values of constituent elements (e.g., transformers) making up the management target (e.g., substation) indicated by the individual estimation information ID 1381.

The insurance necessity flag 1383 is a flag indicating whether buying insurance is necessary for the management target indicated by the individual estimation information ID 1381. For example, "Yes" indicates buying insurance is necessary, while "No" indicates buying insurance is unnecessary.

FIG. 13 is a flowchart showing an example of processes of the maintenance/operation plan output unit 130.

The maintenance/operation plan output unit 130 starts the following processes (S13001).

The maintenance/operation plan output unit 130 determines whether it has completed processing of all rows of the schedule information 126 (S13002).

When having completed processing of all rows of the schedule information 126 (S13002: YES), the maintenance/operation plan output unit 130 ends the whole processes (S13003).

When unprocessed rows remain in the schedule information 126 (S13002: NO), the maintenance/operation plan output unit 130 extracts a head row unprocessed from the schedule information 126 (S13004). In description of FIG. 13, this extracted head row is referred to as a row L.

The maintenance/operation plan output unit 130 determines whether the preventive measure parameter P 1263 of the row L is 1 (S13005).

When the preventive measure parameter P 1263 of the row L is not 1 (S13005: NO), the maintenance/operation plan output unit 130 proceeds to S13009, which will be described later.

When the preventive measure parameter P 1263 of the row L is 1 (S13005: YES), the maintenance/operation plan output unit 130 searches for the risk structure information 125 matching the risk structure information ID 1262 of the row L, and defines the retrieved risk structure information 125 as risk structure information E (S13006).

The maintenance/operation plan output unit 130 specifies the preventive measure information 1175 of the individual estimation information 117, the preventive measure information 1175 being indicated by the subordinate data list 1252 and the preventive measure execution information 1255 of the risk structure information E (S13007).

When an attribute in the preventive measure information 1175 is "maintenance", the maintenance/operation plan output unit 130 adds a value of the elapsed period W 1261 of the row L, a value of the individual estimation information ID 1171 of the individual estimation information 117, the value being specified at the previous step, and a measure name indicated by the preventive measure information 1175, to the maintenance plan information 136. When an attribute in the preventive measure information 1175 is "operation", the maintenance/operation plan output unit 130 adds a value of the elapsed period W 1261 of the row L, a value of the individual estimation information ID 1171 of the individual estimation information 117, the value being specified at the previous step, and a measure name indicated by the preventive measure information 1175, to the operation plan information 137 (S13008).

The maintenance/operation plan output unit 130 determines whether the recovery measure parameter R 1264 of the row L is 1 (S13009).

When the recovery measure parameter R 1264 of the row L is not 1 (S13009: NO), the maintenance/operation plan output unit 130 proceeds to step S13011, which will be described later.

When the recovery measure parameter R 1264 of the row L is 1 (S13009: YES), the maintenance/operation plan output unit 130 carries out the same processes as executed at S13006 to S13008 for the recovery measure information 1176, and adds information on the recovery measure information 1176 to the maintenance plan information 136 and to the operation plan information 137 (S13010).

The maintenance/operation plan output unit 130 selects a row having the individual estimation information ID 1381 matching the risk structure information ID 1262 of the row L, from the insurance plan information 138, and adds a value of the risk value 1266 of the row L to a value of the risk value total 1382 of the selected row (S13011). The maintenance/operation plan output unit 130 then returns to S13002.

Hence the maintenance plan information 136 and the operation plan information 137 are generated. At the same time, the risk value total 1382 for the individual estimation information ID 1381 of the insurance plan information 138 is generated as well.

FIG. 14 is a flowchart showing an example of processes of the insurance plan output unit 131.

The insurance plan output unit 131 starts the following processes (S13101).

The insurance plan output unit 131 determines whether it has completed processing of all rows of the insurance plan information 138 (S13102).

When having completed process of all rows of the insurance plan information 138 (S13102: YES), the insurance plan output unit 131 ends the whole processes (S13103).

When an unprocessed row remains in the insurance plan information 138 (S13102: NO), the insurance plan output unit 131 extracts an unprocessed head row from the insurance plan information 138. (S13104). In description of FIG. 14, the extracted head row is referred to as a row L.

The insurance plan output unit 131 sets the insurance necessity flag 1383 of the row L to Yes when the risk value total 1382 of the row L is equal to or larger than a preset threshold value, and sets the insurance necessity flag 1383 of the row L to No when the risk value total 1382 of the row L is smaller than the preset threshold value (S13105). The insurance plan output unit 131 then returns to S13102.

Hence the insurance necessity flag 1383 of the insurance plan information 138 is set.

The above embodiment of the present invention is an exemplary embodiment for describing the present invention, and is not intended for limiting the scope of the present invention to the embodiment. Those skilled in the art are allowed to implement the present invention in various different modes without departing from the scope of the present invention.

### Reference Signs List

- 1: optimization system
- 2: disk
- 3: network
- 4: display device
- 11: risk estimation unit
- 12: integration unit
- 13: output unit
- 15: processor
- 16: input/output device
- 17: memory
- 110: estimation calculation initializing unit
- 111: estimation calculation executing unit
- 115: risk model template information
- 116: apparatus information
- 117: individual estimation information
- 120: integrated calculation executing unit
- 121: optimization calculation executing unit
- 125: risk structure information
- 126: schedule information
- 130: maintenance/operation plan output unit
- 131: insurance plan output unit
- 136: maintenance plan information
- 137: operation plan information
- 138: insurance plan information
- 1151: risk model ID
- 1152: result information
- 1153: current information
- 1154: estimation function
- 1155: preventive measure information
- 1155: estimation process information
- 1156: recovery measure information
- 1157: estimation process information
- 1161: apparatus ID
- 1162: risk model ID
- 1163: initial information
- 1164: result information
- 1165: threshold information
- 1171: ID
- 1172: result information
- 1173: current information
- 1174: estimation function
- 1175: preventive measure information
- 1176: recovery measure information
- 1177: estimation process information
- 1178: cost information
- 1179: threshold information
- 1251: ID
- 1252: subordinate data list
- 1253: current information
- 1254: aggregate function
- 1255: preventive measure execution information
- 1256: recovery measure execution information
- 1257: cost information
- 1258: threshold information
- 1261: elapsed time
- 1262: risk structure information ID
- 1263: preventive measure parameter
- 1264: recovery measure parameter
- 1265: cost
- 1266: risk value
- 1361: elapsed time
- 1362: individual estimation information ID
- 1363: measure name
- 1371: elapsed time
- 1372: individual estimation information ID
- 1373: measure name
- 1381: individual estimation information ID
- 1382: risk value total
- 1383: insurance necessity flag

## Claims

1. A risk management system that assists in risk management of a management target including a plurality of constituent elements, the risk management system comprising:
a risk estimation unit including countermeasure information indicating a relationship between each of a plurality of risk types and a countermeasure against each risk type, and risk models for estimating a risk value at each point of time in future, the risk models corresponding respectively to the plurality of risk types, the risk estimation unit selecting a risk model corresponding to a risk type of each of the constituent elements, from the risk models and giving result information to the selected risk model to estimate a future risk value of each of the constituent elements; and
an integration unit including risk structure information defining a countermeasure for the management target, based on a structural relationship between the management target and the constituent elements, the integration unit determining an implementation time to apply the countermeasure, based on a risk value of each of the constituent elements, the risk value being estimated by the risk estimation unit.

2. The risk management system according to claim 1, wherein,
the countermeasure information includes:
preventive measure information indicating a relationship between the risk type, a preventive measure for preventing occurrence of a risk of the risk type in advance, and a cost required for the preventive measure; and
recovery measure information indicating a relationship between the risk type, a recovery measure for putting the management target back to its original state when the risk of the risk type occurs, and a cost required for the recovery measure.

3. The risk management system according to claim 2, wherein the preventive measure includes maintenance check of the constituent element or maintenance replacement of the constituent element.

4. The risk management system according to claim 2, wherein the preventive measure includes an operation of adjusting a power transmission path or adjusting a load of the constituent element.

5. The risk management system according to claim 2, wherein the recovery measure includes repair of the constituent element and replacement of the constituent element.

6. The risk management system according to claim 1, wherein the risk type includes one or more of an apparatus deterioration risk representing a risk resulting from a deteriorated state of an apparatus included in the management target, a natural disaster risk representing a risk resulting from an influence of a natural disaster on the management target, and a cyberattack risk representing a risk resulting from a cyberattack on the management target.

7. The risk management system according to claim 1, wherein the integration unit compares a risk value with a threshold for every one of the constituent elements included in the management target at each point of time, determines a countermeasure to keep the risk value equal to or lower than the threshold, for a constituent element with the risk value exceeding the threshold, and records the countermeasure as schedule information.

8. The risk management system according to claim 2, further comprising an output unit that outputs
an implementation time to apply the countermeasure determined by the integration unit and
the preventive measure or the recovery measure to be carried out at the implementation time such that the implementation time and the preventive measure or the recovery measure are association with each other.

9. The risk management system according to claim 1, further comprising an output unit that
calculates a risk value in the management target, using the risk model, and
outputs information indicating a determination on whether or not to apply insurance, the determination being made based on the risk value.

10. A risk management method of assisting in risk management of a management target including a plurality of constituent elements, using a risk management system, the risk management method causing a computer to execute:
a step including countermeasure information indicating a relationship between each of a plurality of risk types and a countermeasure against each risk type, and a plurality of risk models that define a process of estimating a risk value at each point of time in future and determining a countermeasure, the plurality of risk models corresponding respectively to the plurality of risk types, the step being executed to select a risk model corresponding to a risk type of each of the constituent elements, from the plurality of risk models, give result information to the selected risk model to estimate a future risk value of each of the constituent elements, and, according to the risk model, extract a countermeasure corresponding to the risk type, based on the countermeasure information; and
a step including risk structure information defining a countermeasure for the management target and a threshold for applying the countermeasure, based on a structural relationship between the management target and the constituent elements, the step being executed to determine an implementation time to apply the countermeasure, based on an estimated risk value of each of the constituent elements and on the threshold.
